# EUROPEAN PATENT APPLICATION

(11) **EP 4 550 817 A1**
(43) Date of publication of application: **07.05.2025**
(21) Application number: 23163610.1
(22) Date of filing: 23.03.2023
(51) Int. Cl.: H04N 23/63, H04N 23/60, H04N 23/695, G06V 40/60, G06V 40/10, G06V 10/147

(54) **INFORMATION PROCESSING APPARATUS, PROGRAM, AND METHOD FOR PROVIDING ASSISTANCE FOR A USER TO MAINTAIN THE POSTURE OF A CAMERA WITH RESPECT TO AN OBJECT IN SPECIFIC POSTURE**

(30) Priority: 07.06.2022 JP 2022092091
(71) Applicant: Fujifilm Business Innovation Corp., Tokyo (JP)
(72) Inventor: SATO, Ken, Yokohama-shi, Kanagawa (JP); KYOJIMA, Masaki, Yokohama-shi, Kanagawa (JP); MOTOSUGI, Yukari, Yokohama-shi, Kanagawa (JP); OSHIMA, Minoru, Yokohama-shi, Kanagawa (JP)
(74) Representative: Becker Kurig & Partner Patentanwälte mbB

(57) **Abstract**

An information processing apparatus includes a processor configured to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

## Description

### Background

### (i) Technical Field

The disclosure relates to an information processing apparatus, a program, and a method.

### (ii) Related Art

Japanese Patent No. 6156586 discloses an identification device that displays an observation object shape image indicating a shape of an anti-counterfeit medium observed at an observation angle on a display screen, calculates a shape similarity between the observation object shape image and an outer shape of the anti-counterfeit medium serving as an imaging object on the display screen, and determines whether or not the observation angle and an observation position of the image capturing device are correct based on whether or not the shape similarity is equal to or greater than a shape similarity threshold.

### Summary

In some cases where the image of an object is captured by an image capturing device, an operation of causing the posture of the image capturing device with respect to the object to match specific posture is performed. For example, it is thought that a guide for assisting a user to perform a first operation on the image capturing device such that a positional relationship between the object and the image capturing device is maintained in a specific positional relationship and a guide for assisting the user to perform a second operation on the image capturing device such that an angle between the object and the image capturing device is maintained at a specific angle are sequentially outputted. For example, it is thought that a guide is displayed, a guide is outputted by using a voice, and a guide is displayed by using a character string. Specifically, it is thought that the guide for assisting in performing the first operation is displayed, and the guide for assisting in performing the second operation is displayed after the first operation ends. In contrast, it is through that the guide for assisting in performing the second operation is displayed, and the guide for assisting in performing the first operation is displayed after the second operation ends. In these cases, for example, it is difficult to perform the second operation while the positional relationship between the object and the image capturing device is maintained in the specific positional relationship after the first operation ends. Similarly, it is difficult to perform the first operation while the angle between the object and the image capturing device is maintained at the specific angle after the second operation ends.

Accordingly, it is an object of the present disclosure to provide assistance for a user to readily maintain the posture of an image capturing device with respect to an object in specific posture unlike the case where a function of assisting the user to operate the image capturing device such that a positional relationship between the object and the image capturing device is maintained in a specific positional relationship and a function of assisting the user to operate the image capturing device such that an angle between the object and the image capturing device is maintained at a specific angle are sequentially performed.

According to a first aspect of the present disclosure, there is provided an information processing apparatus including a processor configured to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

According to a second aspect of the present disclosure, there is provided the information processing apparatus according to the first aspect in which the first function includes a function of statically or dynamically inducing the first operation to be performed such that the positional relationship between the object and the image capturing device is maintained in the specific positional relationship, and the second function includes a function of statically or dynamically inducing the second operation to be performed such that the angle between the object and the image capturing device is maintained at the specific angle.

According to a third aspect of the present disclosure, there is provided the information processing apparatus according to the first or second aspect in which the first function includes a function of outputting a first guide for assisting in performing the first operation by using a figure, a character string, or a sound, and the second function includes a function of outputting a second guide for assisting in performing the second operation by using a figure, a character string, or a sound.

According to a fourth aspect of the present disclosure, there is provided the information processing apparatus according to the third aspect in which the first function is a function of displaying the first guide on a display, the second function is a function of displaying the second guide on the display, and the processor is configured to cause the display to simultaneously display the first guide and the second guide.

According to a fifth aspect of the present disclosure, there is provided the information processing apparatus according to the third or fourth aspect in which the second guide includes a guide for dynamically representing a state of the image capturing device by using information that is acquired by a sensor.

According to a sixth aspect of the present disclosure, there is provided the information processing apparatus according to any one of the third to fifth aspects in which the processor is configured to cause the second guide to be displayed in a predetermined range, based on a position at which the first guide is displayed.

According to a seventh aspect of the present disclosure, there is provided the information processing apparatus according to any one of the third to fifth aspects in which the processor is configured to cause the second guide to be displayed in the first guide.

According to an eighth aspect of the present disclosure, there is provided the information processing apparatus according to any one of the third to seventh aspects in which the first function is a function of displaying the first guide on a display, the second function is a function of outputting the second guide by using a sound, and the processor is configured to cause the display to display the first guide by using the first function and output the second guide by using the second function and by using the sound.

According to a ninth aspect of the present disclosure, there is provided the information processing apparatus according to any one of the first to eighth aspects in which the processor is configured to perform a first emphasis process in a case where the positional relationship between the object and the image capturing device becomes the specific positional relationship to represent the case.

According to a tenth aspect of the present disclosure, there is provided the information processing apparatus according to any one of the first to ninth aspects in which the processor is configured to perform a second emphasis process in a case where the angle between the object and the image capturing device becomes the specific angle to represent the case.

According to an eleventh aspect of the present disclosure, there is provided the information processing apparatus according to the tenth aspect in which the second emphasis process differs from the first emphasis process.

According to a twelfth aspect of the present disclosure, there is provided the information processing apparatus according to any one of the first to eleventh aspects in which the image capturing device captures and acquires a plurality of collation images when the user performs the first operation and the second operation, and the plurality of collation images and a registration image for identifying the object are collated after the image capturing device acquires the plurality of collation images.

According to a thirteenth aspect of the present disclosure, there is provided the information processing apparatus according to any one of the first to eleventh aspects in which the image capturing device captures and acquires a collation image when the user performs the first operation and the second operation, and the collation image and a registration image for identifying the object are collated whenever the image capturing device acquires the collation image.

According to a fourteenth aspect of the present disclosure, there is provided a program causing a computer to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

According to a fifteenth aspect of the present disclosure, there is provided a method comprising simultaneously performing a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

According to the first to fifth aspects and the fourteenth and fifteenth aspects, the user can readily maintain the posture of the image capturing device with respect to the object in the specific posture unlike the case where a function of assisting the user to operate the image capturing device such that the positional relationship between the object and the image capturing device is maintained in the specific positional relationship and a function of assisting the user to operate the image capturing device such that the angle between the object and the image capturing device is maintained at the specific angle are sequentially performed.

According to the sixth aspect, the magnitude of a change in the line of sight of the user when the posture of the image capturing device with respect to the object is maintained in the specific posture decreases, unlike the case where the second guide is displayed outside the predetermined range, based on the position at which the first guide is displayed.

According to the seventh aspect, the magnitude of the change in the line of sight of the user when the posture of the image capturing device with respect to the object is maintained in the specific posture decreases, unlike the case where the second guide is displayed outside the first guide.

According to the eighth aspect, while the first operation is performed in accordance with the first guide that is displayed on the display, the second operation can be performed in accordance with the second guide that is provided by using the sound.

According to the ninth aspect, the user can be notified of the fact that the positional relationship between the object and the image capturing device becomes the specific positional relationship.

According to the tenth aspect, the user can be notified of the fact that the angle between the object and the image capturing device becomes the specific angle.

According to the eleventh aspect, the user can be notified of the end of the first operation or the second operation.

According to the twelfth aspect, the probability of erroneous determination of the collation is reduced.

According to the thirteenth aspect, a time required for the collation decreases.

### Brief Description of the Drawings

An exemplary embodiment of the present disclosure will be described in detail based on the following figures, wherein:
Fig. 1 illustrates the structure of an individual identification system according to an exemplary embodiment;
Fig. 2 illustrates a collation region viewed from a registration image capturing device;
Fig. 3 illustrates a collation region viewed from a collation image capturing device;
Fig. 4 is a block diagram illustrating the structure of the collation image capturing device;
Fig. 5 illustrates the collation image capturing device and an object in a three-dimensional space;
Fig. 6 illustrates the collation image capturing device and the object in the three-dimensional space;
Fig. 7 is a block diagram illustrating the structure of a collation device;
Fig. 8 illustrates specific examples of a first guide and a second guide;
Fig. 9 illustrates a guide in a first example;
Fig. 10 illustrates the guide in the first example;
Fig. 11 illustrates the guide in the first example;
Fig. 12 illustrates the guide in the first example;
Fig. 13 illustrates a guide in a second example;
Fig. 14 illustrates a direction in which light is radiated to the object when a registration image is acquired;
Fig. 15 illustrates a guide in a third example;
Fig. 16 illustrates the guide in the third example;
Fig. 17 illustrates registration images and a collation image;
Fig. 18 illustrates collation images; and
Fig. 19 illustrates the collation images.

### Detailed Description

A technique described below maintains the posture of an image capturing device with respect to an object in specific posture in the case where the image capturing device captures an image of the object.

In the following description by way of example, an individual identification system is taken as an example. An exemplary embodiment, however, is not limited to the individual identification system. The exemplary embodiment may be used provided that the posture of the image capturing device with respect to the object is maintained in the specific posture.

The individual identification system uniquely identifies the object by collating a registration image and a collation image. The registration image is acquired in a manner in which the image of the object is captured in advance. The collation image is acquired to be collated together with the registration image in a manner in which the image of the object is captured.

For example, an image of a part or the whole of the surface of the object is registered in advance as inherent information about the object. The individual identification system uniquely identifies that the object to be collated is the same as a registered object, that is, the object to be collated is genuine.

An example of the inherent information about the object is a random pattern including a fine pattern. Specific examples of the random pattern include a frosted glass pattern, a pattern that is formed by processing metal or synthetic resin (for example, plastic), a wrinkled pattern that is acquired by texturing processing, a randomly braided pattern, a randomly and finely dotted pattern, a pattern (for example, a pattern that has random particle distribution) that is formed by printing with ink containing luminescent particles, and a hologram. The random pattern may be a pattern that is coincidentally formed without intensity or may be a pattern that is intentionally formed for collation. A technique of optically reading the random pattern to use this as information is an example of artifact metrics.

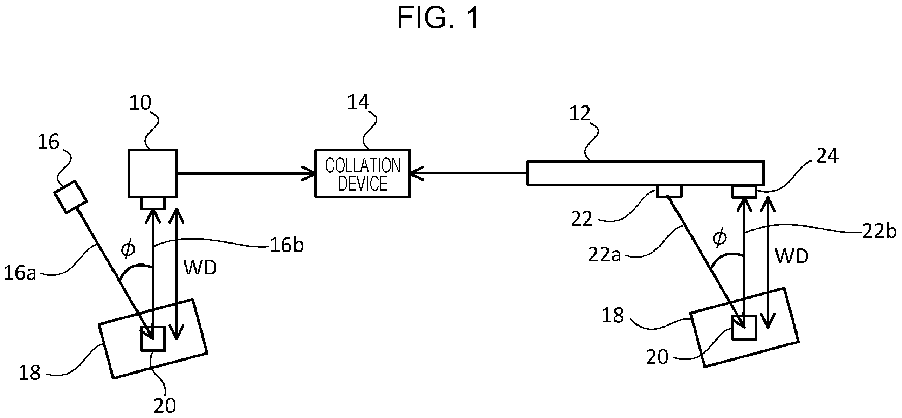

Fig. 1 illustrates the structure of the individual identification system according to the exemplary embodiment. The individual identification system is an example of an information processing system according to the exemplary embodiment.

The individual identification system according to the exemplary embodiment includes a registration image capturing device 10, a collation image capturing device 12, and a collation device 14. The registration image capturing device 10 is a device (for example, an exclusive camera for registration) that captures the registration image that represents the object. The collation image capturing device 12 is a device (for example, a device that includes a camera and a light source) that captures the collation image that is collated together with the registration image. The collation device 14 identifies the object by collating the registration image and the collation image. Fig. 1 illustrates a side view of the registration image capturing device 10 and the collation image capturing device 12.

For example, the registration image capturing device 10 and the collation device 14 communicate with each other via a communication path such as the internet or a local area network (LAN). Similarly, the collation image capturing device 12 and the collation device 14 communicate with each other via a communication path such as the internet or a LAN. The registration image capturing device 10 and the collation device 14 may output or receive data via a storage medium such as a portable recording medium (for example, a hard disk drive or a USB memory) without a communication path. Similarly, the collation image capturing device 12 and the collation device 14 may output or receive data via a storage medium such as a portable recording medium (for example, a hard disk drive or a USB memory) without a communication path.

Light (referred to below as "incident light 16a") is radiated from a light source 16 such as a light emitting diode (LED) to an object 18, and the registration image capturing device 10 captures the image of light (referred to below as "reflection light 16b") that is reflected from the object 18. Consequently, a registration image that represents the object 18 is acquired. For example, the registration image capturing device 10 and the light source 16 include exclusive equipment for registration. The surface of the object 18 has a collation region 20. The image of the collation region 20 is captured by capturing the image of the object 18. The collation region 20 is a region in which the random pattern described above is formed.

An angle φ is equal to the sum of the incident angle (that is, an angle that is formed between a straight line perpendicular to the surface of the object 18 and the incident light 16a) of the incident light 16a and the reflection angle (that is, an angle that is formed between the straight line perpendicular to the surface of the object 18 and the reflection light 16b) of the reflection light 16b. A distance WD when the registration image is acquired is a distance between the registration image capturing device 10 and the object 18.

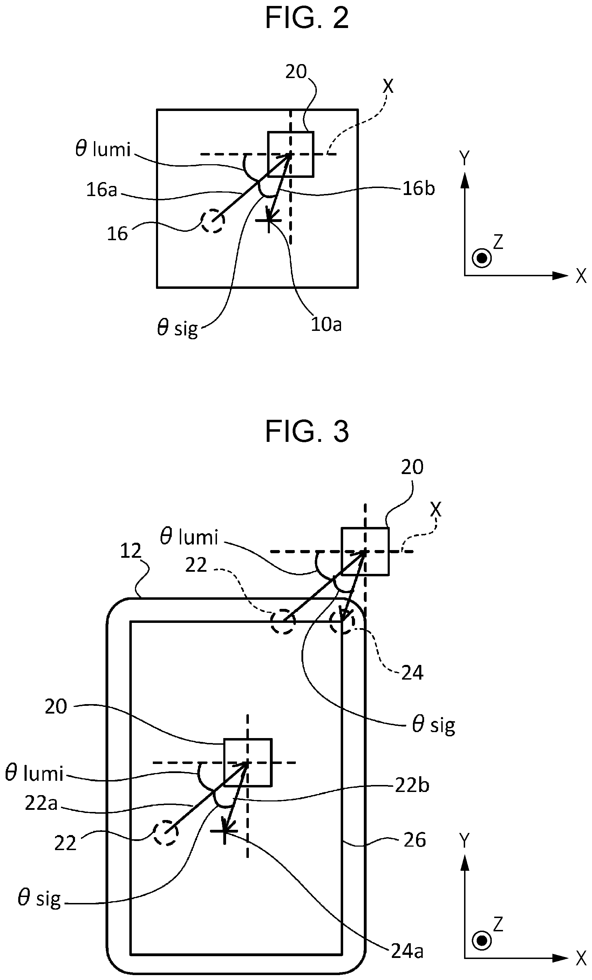

Fig. 2 illustrates the collation region 20 viewed from the registration image capturing device 10. Fig. 2 illustrates angular relationships among the registration image capturing device 10, the light source 16, and the collation region 20 when the collation region 20 is viewed from the registration image capturing device 10.

A three-dimensional rectangular coordinate system that has an X-axis, a Y-axis, and a Z-axis that are perpendicular to each other is defined here. In an example, the Z-axis is perpendicular to the surface of the object 18, and the surface of the object 18 is parallel with a plane (an XY plane) that is defined by using the X-axis and the Y-axis. The center of the collation region 20 is determined to be the origin of the three-dimensional rectangular coordinate system. The three-dimensional rectangular coordinate system is set in the registration image capturing device 10.

An angle θsig is on the plane (the XY plane) described above and is formed between the reflection light 16b and the incident light 16a that are projected on the XY plane with a position (for example, a center) on the collation region 20 being a vertex. That is, the angle θsig is formed between a line that connects the position of the light source 16 and the position on the collation region 20 that are projected on the XY plane to each other and a line that connects the center 10a of the registration image capturing device 10 and the position on the collation region 20 that are projected on the XY plane to each other with the position on the collation region 20 being the vertex.

An angle θlumi is on the plane (the XY plane) described above and is formed between the incident light 16a that is projected on the XY plane and the X-axis with a position (for example, a center) on the collation region 20 being a vertex. That is, the angle θlumi is formed between the X-axis and a line that connects the position of the light source 16 and the position on the collation region 20 that are projected on the XY plane to each other with the position on the collation region 20 being the vertex.

The acquired registration image is outputted to the collation device 14 and is stored in a memory of the collation device 14. Consequently, the registration image is registered in a registration image database (DB).

For example, the collation image capturing device 12 is a smartphone, a tablet PC, or a cellular phone and includes a light source 22 such as a LED and a camera 24. Light (referred to below as "incident light 22a") is radiated from the light source 22 to the object 18. The camera 24 captures the image of light (referred to below as "reflection light 22b") that is reflected from the object 18. Consequently, a collation image that represents the object 18 is acquired. For example, a user operates the collation image capturing device 12 to capture the image of the object 18.

An angle φ when the collation image is acquired is equal to the sum of the incident angle (that is, an angle that is formed between a straight line perpendicular to the surface of the object 18 and the incident light 22a) of the incident light 22a and the reflection angle (that is, an angle that is formed between the straight line perpendicular to the surface of the object 18 and the reflection light 22b) of the reflection light 22b and is substantially equal to the angle φ when the registration image is acquired. The reason is that it is necessary for positional relationships among the light source 22, the camera 24, and the object 18 to be substantially the same as positional relationships when the registration image is acquired because the random pattern that is formed on the collation region 20 changes depending on the direction in which the light is radiated. The range of the concept of "substantially the same" includes the case where the angle φ when the collation image is acquired is equal to the angle φ when the registration image is acquired and the case where a difference between the angle φ when the collation image is acquired and the angle φ when the registration image is acquired is within a permissible range (for example, a range that enables the precision of collation by using the registration image and the collation image to be target precision or higher).

A distance WD when the collation image is acquired is a distance between the collation image capturing device 12 and the object 18 and is substantially equal to the distance WD when the registration image is acquired. The range of the concept of "substantially equal" includes the case where the distance WD when the collation image is acquired is equal to the distance WD when the registration image is acquired and the case where a difference between the distance WD when the collation image is acquired and the distance WD when the registration image is acquired is within a permissible range (for example, a range that enables the precision of collation by using the registration image and the collation image to be target precision or higher).

Fig. 3 illustrates the collation region 20 viewed from the collation image capturing device 12. Fig. 3 illustrates angular relationships among the light source 22, the camera 24, and the collation region 20 when the collation region 20 is viewed from the collation image capturing device 12.

A three-dimensional rectangular coordinate system that has an X-axis, a Y-axis, and a Z-axis that are perpendicular to each other is defined here. In an example, the Z-axis is perpendicular to the surface of the object 18, and the surface of the object 18 is parallel with a plane (an XY plane) that is defined by using the X-axis and the Y-axis. The center of the collation region 20 is determined to be the origin of the three-dimensional rectangular coordinate system. The three-dimensional rectangular coordinate system is set in the collation image capturing device 12.

An angle θsig is on the plane (the XY plane) described above and is formed between the reflection light 22b and the incident light 22a that are projected on the XY plane with a position (for example, a center) on the collation region 20 being a vertex. That is, the angle θsig is formed between a line that connects the position of the light source 22 and the position on the collation region 20 that are projected on the XY plane to each other and a line that connects the center 24a of the camera 24 and the position on the collation region 20 that are projected on the XY plane to each other with the position on the collation region 20 being the vertex.

An angle θlumi is on the plane (the XY plane) described above and is formed between the incident light 22a that is projected on the XY plane and the X-axis with a position (for example, a center) on the collation region 20 being a vertex. That is, the angle θlumi is formed between the X-axis and a line that connects the position of the light source 22 and the position on the collation region 20 that are projected on the XY plane to each other with the position on the collation region 20 being the vertex.

The angle θsig when the collation image is acquired is substantially equal to the angle θsig when the registration image is acquired. The range of the concept of "substantially equal" includes the case where the angle θsig when the collation image is acquired is equal to the angle θsig when the registration image is acquired and the case where a difference between the angle θsig when the collation image is acquired and the angle θsig when the registration image is acquired is within a permissible range (for example, a range that enables the precision of collation by using the registration image and the collation image to be target precision or higher).

The angle θlumi when the collation image is acquired is substantially equal to the angle θlumi when the registration image is acquired. The range of the concept of "substantially equal" includes the case where the angle θlumi when the collation image is acquired is equal to the angle θlumi when the registration image is acquired and the case where a difference between the angle θlumi when the collation image is acquired and the angle θlumi when the registration image is acquired is within a permissible range (for example, a range that enables the precision of collation by using the registration image and the collation image to be target precision or higher).

The collation image capturing device 12 includes a display 26. An image (for example, an image that represents the collation region 20) that is captured by the camera 24 is displayed on the display 26. In an example illustrated in Fig. 3, the light source 22 and the center 24a are illustrated on the display 26 for convenience of description of the angular relationships. However, the light source 22 and the center 24a are not displayed on the display 26. The light source 22 and the camera 24 are opposite the display 26 (that is, on the back surface of the collation image capturing device 12).

The acquired collation image is outputted to the collation device 14. The collation image capturing device 12 may extract the image that represents the collation region 20 from the collation image, and the extracted image may be outputted to the collation device 14. The collation device 14 collates the registration image and the collation image and consequently determines whether an object that is represented in the collation image is the same as a registered object.

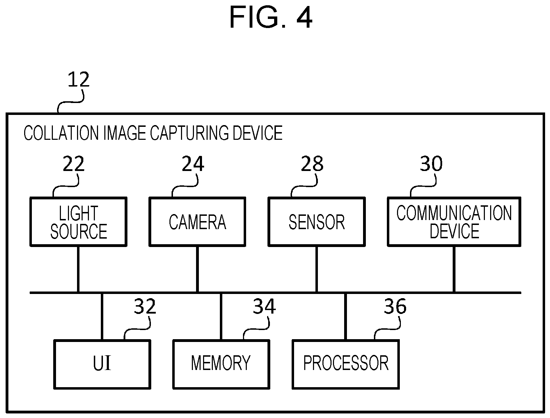

The structure of the collation image capturing device 12 will be described with reference to Fig. 4. Fig. 4 is a block diagram illustrating the structure of the collation image capturing device 12.

The collation image capturing device 12 includes the light source 22, the camera 24, a sensor 28, a communication device 30, a UI 32, a memory 34, and a processor 36.

The collation image is acquired by capturing the image by using the light source 22 and the camera 24 as described above.

The sensor 28 is a gyro-sensor and detects an angular velocity. The sensor 28 detects rotation of the collation image capturing device 12. For example, the sensor 28 may include an acceleration sensor or a global positioning system (GPS) module.

The communication device 30 includes one or multiple communication interfaces such as a communication chip and a communication circuit and has a function of transmitting information to another device and a function of receiving information from another device. The communication device 30 may have a wireless communication function such as near field communication or Wi-Fi (registered trademark) or may have a wired communication function.

The UI 32 is a user interface and includes the display 26 and an input device. Examples of the display 26 include a liquid-crystal display and an EL display. Examples of the input device include a keyboard, a mouse, input keys, or an operation panel. The UI 32 may be a UI such as a touch screen that includes the display 26 and the input device. The UI 32 may include a speaker and a microphone.

The memory 34 is a device that includes one or multiple storage areas in which data is stored. Examples of the memory 34 include a hard disk drive (HDD), a solid state drive (SSD), various memories (for example a RAM, a DRAM, a NVRAM, and a ROM), another storage device (for example, an optical disk), and a combination thereof.

The processor 36 controls the operation of the components of the collation image capturing device 12.

The processor 36 performs a function of assisting the user to operate the collation image capturing device 12 such that the posture of the collation image capturing device 12 with respect to the object 18 is maintained in specific posture. The specific posture is the posture of the registration image capturing device 10 and the light source 16 with respect to the object 18 when the registration image is acquired. For example, the processor 36 performs the function of assisting the user to operate the collation image capturing device 12 such that the posture of the collation image capturing device 12 with respect to the object 18 is substantially the same as the specific posture. The range of the concept that the "posture is substantially the same" includes the case where the posture of the registration image capturing device 10 and the light source 16 with respect to the object 18 when the registration image is acquired is the same as the posture of the collation image capturing device 12 with respect to the object 18 when the collation image is acquired and the case where a difference between the posture of the registration image capturing device 10 and the light source 16 with respect to the object 18 when the registration image is acquired and the posture of the collation image capturing device 12 with respect to the object 18 when the collation image is acquired is within a permissible range (for example, a range that enables the precision of collation by using the registration image and the collation image to be target precision or higher).

The processor 36 performs the function of assisting the user to perform the operation such that a first function and a second function are simultaneously performed. The range of the concept that the "first function and the second function are simultaneously performed" includes the case where a period during which the first function is performed partly matches a period during which the second function is performed.

The first function is a function of assisting the user to perform a first operation on the collation image capturing device 12 such that a positional relationship between the object 18 and the collation image capturing device 12 is maintained in a specific positional relationship. The specific positional relationship may include only a first relationship described below or may be a combination of the first relationship and a second relationship.

The first relationship is a relationship between the position of the object 18 and the position of the camera 24 when the collation image capturing device 12 captures the image of the object 18 at an ideal capturing position and is determined based on the positional relationship between the object 18 and the registration image capturing device 10 when the registration image is acquired. For example, a three-dimensional rectangular coordinate system that has an X-axis, a Y-axis and a Z-axis is defined. The position of the object 18 and the position of the camera 24 correspond to coordinates (x, y, z) on a three-dimensional space that is represented by the three-dimensional rectangular coordinate system.

The second relationship is a relationship in rotation angle (that is, a rotation angle about the Z-axis) of the collation image capturing device 12 about the Z-axis when the collation image capturing device 12 captures the image of the object 18 at the ideal capturing position in the case where the Z-axis is determined as an axis perpendicular to the surface of the object 18. Accurately, the rotation angle at this time corresponds to the rotation angles of the light source 22 and the camera 24 and is determined based on the angles θsig and θlumi when the registration image is acquired.

That is, the specific positional relationship may be the positional relationship (the first relationship) between the object 18 and the camera 24 that is determined by using the coordinates (x, y, z) in the three-dimensional space or may be a combination of the first relationship and the rotation angle (the second relationship) about the Z-axis.

In the case where the specific positional relationship includes only the first relationship, the first operation is an operation of moving the collation image capturing device 12 along the X-axis, the Y-axis, or the Z-axis. In the case where the specific positional relationship is the combination of the first relationship and the second relationship, the first operation includes the operation of moving the collation image capturing device 12 along the X-axis, the Y-axis, or the Z-axis and an operation of rotating the collation image capturing device 12 about the Z-axis.

The second function is a function of assisting the user to perform a second operation on the collation image capturing device 12 such that angles between the object 18 and the collation image capturing device 12 are maintained at specific angles. The specific angles are ideal angles when the collation image capturing device 12 captures the image of the object 18 and are determined based on the angle φ when the registration image is acquired. Specifically, the specific angles are determined by using the rotation angles (specifically, a rotation angle about the X-axis and a rotation angle about the Y-axis) of the registration image capturing device 10 and the light source 16 with respect to the object 18 when the registration image is acquired.

The second operation includes an operation of rotating the collation image capturing device 12 about the X-axis and an operation of rotating the collation image capturing device 12 about the Y-axis.

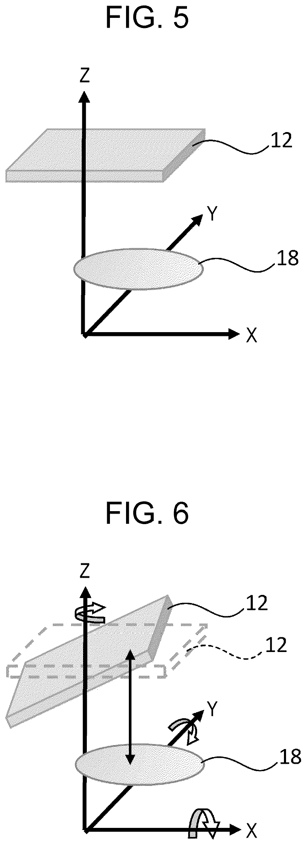

The ideal capturing position will be described with reference to Fig. 5. Fig. 5 illustrates the collation image capturing device 12 and the object 18 in the three-dimensional space. The X-axis, the Y-axis, and the Z-axis that the three-dimensional rectangular coordinate system has are illustrated. The ideal capturing position in the three-dimensional space corresponds to the coordinates (x, y, z) of the collation image capturing device 12 with the angles between the collation image capturing device 12 and the object 18 maintained at constant angles. If angles between the registration image capturing device 10 and the object 18 when the registration image is acquired are 0°, the constant angles are 0°. For example, when the collation image capturing device 12 is moved on the XY plane, the object 18 that moves is displayed on the display 26, and when the collation image capturing device 12 is moved along the Z-axis, the size of the object 18 that is displayed on the display 26 changes.

The ideal angles will be described with reference to Fig. 6. Fig. 6 illustrates the collation image capturing device 12 and the object 18 in the three-dimensional space. The X-axis, the Y-axis, and the Z-axis that the three-dimensional rectangular coordinate system has are illustrated. The ideal angles in the three-dimensional space are the rotation angles (the rotation angle of the collation image capturing device 12 about the X-axis and the rotation angle of the collation image capturing device 12 about the Y-axis) with the distance between the collation image capturing device 12 and the object 18 maintained at a constant distance (for example, the distance WD when the registration image is acquired). The rotation angle of the collation image capturing device 12 about the Z-axis is the rotation angle of the second relationship described above.

The three-dimensional rectangular coordinate system illustrated in Fig. 5 and the three-dimensional rectangular coordinate system illustrated in Fig. 6 may be the same or may differ from each other. The three-dimensional rectangular coordinate systems may be set depending on the collation image capturing device 12.

The first function may include a function of statically or dynamically inducing the user to perform the first operation such that the positional relationship between the object 18 and the collation image capturing device 12 is maintained in the specific positional relationship. Similarly, the second function may include a function of statically or dynamically inducing the user to perform the second operation such that the angles between the object 18 and the collation image capturing device 12 are maintained at the specific angles.

The first function includes a function of outputting information (for example, information about a region, coordinates, or a size) that represents the whole of the object 18, a part of the object 18, or the ideal capturing position such that the positional relationship between the object 18 and the collation image capturing device 12 is maintained in the specific positional relationship. For example, the first function includes a function of outputting a first guide for assisting in performing the first operation by using a figure, a character string, or a voice. The figure is a frame imitating the whole of the outer shape of the object 18 or a part thereof, a line, a symbol mark, or another figure. For example, the character string may be a logo. The first function may include a function of displaying the ideal capturing position that is emphasized by using, for example, a color, brightness, contrast. Specifically, the processor 36 may cause the display 26 to display a figure or a character string that represents the first guide or may cause a voice that represents the first guide to sound from the speaker. The processor 36 may cause the display 26 to display the figure or the character string that represents the first guide and may cause the voice that represents the first guide to sound from the speaker.

The second function includes a function of expressing the ideal angles by using the whole of the object 18, a part of the object 18, or another indicator such that the angles between the object 18 and the collation image capturing device 12 are maintained at the specific angles. For example, the second function includes a function of outputting the second guide for assisting in performing the second operation by using a figure, a character string, or a voice. The figure is a frame imitating the whole of the outer shape of the object 18 or a part thereof, a line, a symbol mark, or another figure. For example, the character string may be a logo. The second function may include a function of outputting an indicator that represents the state of the collation image capturing device 12 that rotates by using a figure (for example, a symbol mark), a character string or a voice. Specifically, the processor 36 may cause the display 26 to display the figure or the character string that represents the second guide or may cause a voice that represents the second guide to sound from the speaker. The processor 36 may cause the display 26 to display the figure or the character string that represents the second guide and may cause the voice that represents the second guide to sound from the speaker.

In an example in which the first function and the second function are simultaneously performed, the first guide and the second guide are simultaneously outputted. Examples in which the first guide and the second guide are simultaneously outputted are as follows:
The processor 36 causes the display 26 to simultaneously display the figure that represents the first guide and the figure that represents the second guide.

The processor 36 causes the display 26 to display the figure that represents the first guide or the second guide and causes the voice that represents the other to sound from the speaker. For example, the processor 36 causes the display 26 to display the figure that represents the first guide and causes the voice that represents the second guide to sound from the speaker, or vice versa.

The processor 36 causes the display 26 to simultaneously display the character string that represents the first guide and the character string that represents the second guide.

These are described by way of example. The first guide and the second guide may be outputted in a single or multiple ways selected from a figure, a character string, and a voice. Other than the above, the first guide and the second guide may be expressed by using a vibration.

In an example in which the first operation is statically induced, a stationary figure or a stationary character string is displayed. In an example in which the first operation is dynamically induced, the first guide is outputted by using a voice in conjunction with the movement (for example, movement along the X-axis, the Y-axis, or the Z-axis or rotation about the Z-axis) of the collation image capturing device 12.

In an example in which the second operation is statically induced, a stationary figure or a stationary character string is displayed. In an example in which the second operation is dynamically induced, a figure or a character string that represents the degree of rotation (for example, the degree of rotation about the X-axis or the degree of rotation about the Y-axis) of the collation image capturing device 12 is displayed, or a voice that represents the degree of rotation is outputted. For example, the second guide includes a guide that dynamically represents the state of the collation image capturing device 12 by using information that is acquired by the sensor 28, and an example in which the second operation is dynamically induced corresponds to displaying the guide.

In the case where the first guide and the second guide are displayed on the display 26, the processor 36 may cause the second guide to be displayed in a predetermined range, based on the position at which the first guide is displayed or may cause the second guide to be displayed in the first guide. In another example, the processor 36 may cause the first guide to be displayed in the second guide. The processor 36 may cause the second guide to be displayed outside the first guide or may cause the first guide to be displayed outside the second guide.

In the case where the positional relationship between the object and the collation image capturing device 12 becomes the specific positional relationship, the processor 36 may perform a first emphasis process to represent the case. Examples of the first emphasis process include a process of changing the color of the first guide that is displayed, a process of outputting a sound or a character string that represents that the positional relationship becomes the specific positional relationship, a process of displaying an image (for example, a symbol mark) that represents that the positional relationship becomes the specific positional relationship, a process of vibrating the collation image capturing device 12, a process of causing a light in the collation image capturing device 12 to blink (for example, a process of causing the display 26 to blink), and a combination of multiple processes among these.

In the case where the angles between the object and the collation image capturing device 12 become the specific angles, the processor 36 may perform a second emphasis process to represent the case. Examples of the second emphasis process include a process of changing the color of the second guide that is displayed, a process of outputting a sound or a character string that represents that the angles become the specific angles, a process of displaying an image (for example, a symbol mark) that represents that the angles become the specific angles, a process of vibrating the collation image capturing device 12, a process of causing the light in the collation image capturing device 12 to blink (for example, the process of causing the display 26 to blink), and a combination of multiple processes among these.

The first emphasis process and the second emphasis process may be the same or may differ from each other. For example, the first emphasis process is the process of changing the color of the first guide that is displayed, and the second emphasis process is the process of vibrating the collation image capturing device 12. This is just an example, and another combination is acceptable. The user may readily recognize whether the positional relationship becomes the specific positional relationship or whether the angles become the specific angles by changing the first emphasis process and the second emphasis process from each other, unlike the case where the first emphasis process and the second emphasis process are the same.

In the case where the positional relationship between the object and the collation image capturing device 12 becomes the specific positional relationship, and the angles between the object and the collation image capturing device 12 become the specific angles, the processor 36 may perform an emphasis process.

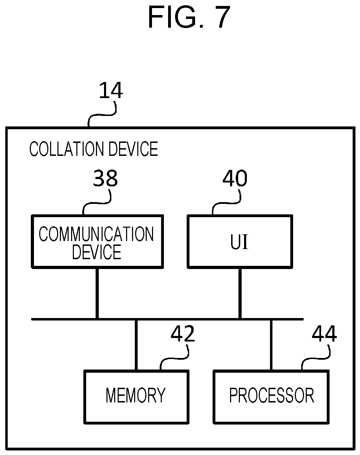

The structure of the collation device 14 will now be described with reference to Fig. 7. Fig. 7 is a block diagram illustrating the structure of the collation device 14.

The collation device 14 includes a communication device 38, a UI 40, a memory 42, and a processor 44. An example of the collation device 14 is a device such as a personal computer or a server.

The communication device 38 includes one or multiple communication interfaces such as a communication chip and a communication circuit and has a function of transmitting information to another device and a function of receiving information from another device. The communication device 38 may have a wireless communication function such as near field communication or Wi-Fi (registered trademark) or may have a wired communication function.

The UI 40 is a user interface and includes a display and an input device. Examples of the display include a liquid-crystal display and an EL display. Examples of the input device include a keyboard, a mouse, input keys, or an operation panel. The UI 40 may be a UI such as a touch screen that includes the display and the input device.

The memory 42 is a device that includes one or multiple storage areas in which data is stored. Examples of the memory 42 include a hard disk drive (HDD), a solid state drive (SSD), various memories (for example a RAM, a DRAM, a NVRAM, and a ROM), another storage device (for example, an optical disk), and a combination thereof.

The registration image is stored in the memory 42. For example, the registration image DB is created by using the memory 42, and identification information (for example, identification (ID)) for uniquely identifying the object 18 and the registration image are associated with each other and are registered in the registration image DB.

The processor 44 controls the operation of the components of the collation device 14.

The processor 44 receives the registration image that is acquired by the registration image capturing device 10, associates the registration image and the identification information about the object 18 with each other, and registers these in the registration image DB. The processor 44 receives the collation image that is acquired by the collation image capturing device 12, collates the collation image and the registration image that is registered in the registration image DB, and outputs information that represents the result of collation. For example, the information that represents the result of collation is outputted to the collation image capturing device 12.

Specifically, the processor 44 reads the registration image from the registration image DB and calculates similarity between the read registration image and the collation image. The similarity is calculated by using a known algorithm. In the case where the calculated similarity exceeds a threshold, the processor 44 determines that the registration image matches the collation image. In the case where the calculated similarity does not exceed the threshold, the processor 44 determines that the registration image does not match the collation image. The processor 44 outputs the result of determination as the result of collation.

Image collation has an error rate due to, for example, a variation or a quantization error in the input of the camera that is used for capturing the image. The error rate includes a false rejection rate that is probability that a true case is determined to be false and a false acceptance rate that is probability that a false case is determined to be true. There is a trade-off relationship between these, and when one decreases, the other increases. Accordingly, the threshold is set such that a target for collation has the minimum loss.

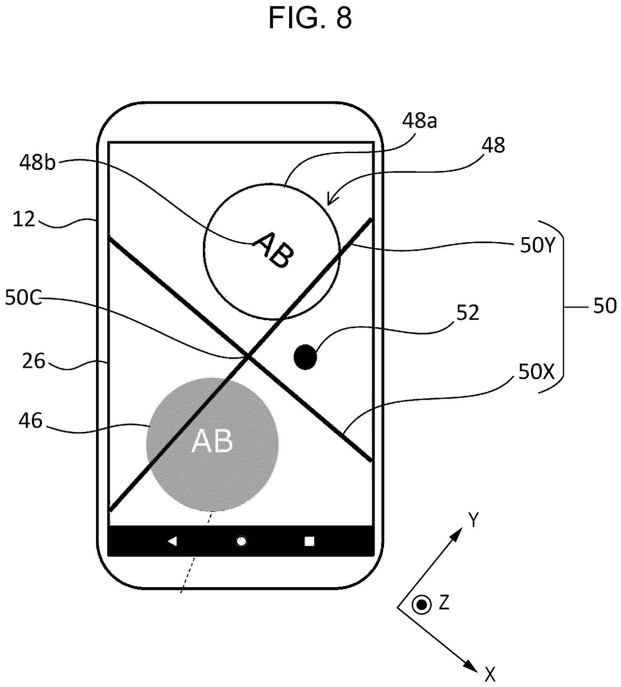

Specific examples of the first guide and the second guide will now be described with reference to Fig. 8. Fig. 8 illustrates the display 26 of the collation image capturing device 12. The three-dimensional rectangular coordinate system that has the X-axis, the Y-axis, and the Z-axis that are perpendicular to each other is set in the collation image capturing device 12. An axis perpendicular to the surface of an object 46 is defined as the Z-axis.

In an example described herein, the camera 24 of the collation image capturing device 12 captures the image of the object 46 on which a character string "AB" (for example, a logo) is drawn, and an image that represents the object 46 is displayed on the display 26.

The processor 36 causes the display 26 to display a guide 48, a coordinate axis figure 50, and a mark 52.

The guide 48 is an example of the first guide and includes a frame 48a and a character string 48b. The frame 48a is a figure imitating the outer shape of the object 46. In an example described herein, the outer shape of the object 46 is circular, and the frame 48a has a circular shape. In the frame 48a, the character string 48b that is the same as the character string "AB" that is drawn on the object 46 is displayed. A position at which the guide 48 is displayed on the display 26 corresponds to the ideal capturing position in the three-dimensional space and is determined based on the position (x, y, z) of the registration image capturing device 10 when the registration image capturing device 10 captures the image of the object 46 at the ideal capturing position. The direction (that is, the rotation angle about the Z-axis) of the character string 48b on the XY plane is determined based on the rotation angle of the registration image capturing device 10 about the Z-axis when the registration image capturing device 10 captures the image of the object 46 at the ideal capturing position. The size of the guide 48 (that is, the size of the frame 48a and the size of the character string 48b) is determined based on the distance WD when the registration image capturing device 10 captures the image of the object 46. Data that represents the guide 48 is generated by the registration image capturing device 10, the collation image capturing device 12, the collation device 14 or another device and is stored in the memory 34 of the collation image capturing device 12.

The guide 48 is displayed with the result that the first function described above is performed. In an example described herein, the specific positional relationship is a combination of the first relationship and the second relationship, and the guide 48 serves as a guide for causing the position of the camera 24 to match the position of the object 46 in the three-dimensional space and a guide for causing the rotation angle of the collation image capturing device 12 about the Z-axis to match the rotation angle of the object 46 about the Z-axis. Specifically, the frame 48a functions as the guide for causing the position of the camera 24 to match the position of the object 46 in the three-dimensional space. The frame 48a is a guide for statically inducing the positions to be matched. The character string 48b that is displayed in the frame 48a functions as the guide for causing the rotation angle of the collation image capturing device 12 about the Z-axis to match the rotation angle of the object 46 about the Z-axis. A position at which the character string 48b is displayed is determined based on the ideal capturing position, and accordingly, the character string 48b may function as the guide for causing the position of the camera 24 to match the position of the object 46 in the three-dimensional space. The character string 48b is a guide for statically inducing the rotation and the positions to be matched. The guide 48 functions as a guide for inducing the user such that the collation image capturing device 12 captures the image of the object 46 at the ideal capturing position as described above. The guide 48 also functions as a guide for inducing the user such that the rotation angle of the collation image capturing device 12 about the Z-axis matches the rotation angle of the object 46 about the Z-axis.

The coordinate axis figure 50 contains a guide 50X that represents the X-axis and a guide 50Y that represents the Y-axis. An intersection point 50C between the guide 50X and the guide 50Y corresponds to the origin of the three-dimensional rectangular coordinate system. A position at which the intersection point 50C is displayed on the display 26 is determined based on the ideal angles in the three-dimensional space and is specifically determined based on the angle φ when the registration image is acquired.

The mark 52 is a figure that represents the rotation angles (specifically, the rotation angle about the X-axis and the rotation angle about the Y-axis) of the collation image capturing device 12 that are acquired by the gyro-sensor that is included in the sensor 28. The processor 36 causes the display 26 to display the mark 52 at a position associated with the rotation angles that are acquired by the gyro-sensor. When the direction of the collation image capturing device 12 changes, the gyro-sensor detects the change, and the processor 36 changes a position at which the mark 52 is displayed in response to the change.

The coordinate axis figure 50 and the mark 52 are examples of the second guide and are displayed with the result that the second function is performed. The position at which the mark 52 is displayed changes depending on the direction of the collation image capturing device 12, and accordingly, the mark 52 is a guide for dynamically inducing the rotation angles about the X-axis and the Y-axis to be matched. The coordinate axis figure 50 is a static guide that represents the coordinate axes for the mark 52 that functions as a dynamic guide. The coordinate axis figure 50 and the mark 52 function as the guide for inducing the user such that the collation image capturing device 12 captures the image of the object 46 at the ideal angles as described above. Data that represents the coordinate axis figure 50 and the mark 52 is generated by the registration image capturing device 10, the collation image capturing device 12, the collation device 14, or another device and is stored in the memory 34 of the collation image capturing device 12.

The processor 36 simultaneously performs the first function and the second function and causes the display 26 to simultaneously display the guide 48, the coordinate axis figure 50, and the mark 52.

The user changes the position (that is, coordinates (x, y, z) in the three-dimensional space) of the collation image capturing device 12 such that the position at which the object 46 is displayed on the display 26 substantially matches the position at which the frame 48a is displayed. The user changes the rotation angle of the collation image capturing device 12 about the Z-axis such that the direction of the character string 48b substantially matches the direction of the character string that is drawn on the object 46. The user changes the rotation angles of the collation image capturing device 12 about the X-axis and the Y-axis such that the position at which the mark 52 is displayed substantially matches the position at which the intersection point 50C is displayed. The range of the concept of the "positions of display substantially match each other" includes the case where the positions of display match each other and the case where a difference between the positions of display is within a permissible range (for example, a range that enables the precision of collation by using the registration image and the collation image to be target precision or higher). In the case where the position at which the object 46 is displayed substantially matches the position at which the frame 48a is displayed in advance, it is not necessary to change the position of the collation image capturing device 12. The same is true for the rotation angles about the X-axis, the Y-axis, and the Z-axis.

In another example, the processor 36 may cause the display 26 to display the guide 48, the coordinate axis figure 50, and the mark 52 and may output the first guide and the second guide by using a voice. For example, the processor 36 outputs the direction in which the collation image capturing device 12 is moved and the distance thereof to cause the position at which the object 46 is displayed to match the position at which the frame 48a is displayed, outputs the rotation angle about the Z-axis for causing the direction of the character string that is drawn on the object 46 to match the direction of the character string 48b by using a voice, or outputs the rotation angles about the X-axis and the Y-axis for causing the position at which the mark 52 is displayed to match the intersection point 50C by using a voice.

In another example, the processor 36 may cause the display 26 to display the guide 48 and may output the second guide by using a voice.

Specific examples will now be described.

### First Example

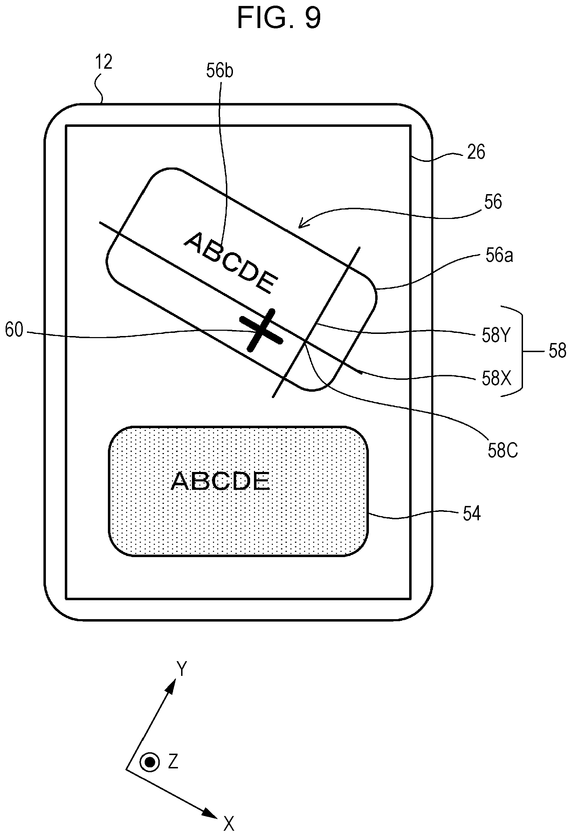

A first example will be described with reference to Fig. 9 to Fig. 12. Fig. 9 to Fig. 12 illustrate a guide in the first example. Fig. 9 to Fig. 12 illustrate the display 26 of the collation image capturing device 12. The three-dimensional rectangular coordinate system that has the X-axis, the Y-axis, and the Z-axis that are perpendicular to each other is set in the collation image capturing device 12. An axis perpendicular to the surface of an object 54 is defined as the Z-axis.

In an example described herein, the image of the object 54 on which a character string "ABCDE" (for example, a logo) is drawn is captured by the camera 24 of the collation image capturing device 12, and an image that represents the object 54 is displayed on the display 26.

The processor 36 causes the display 26 to display a guide 56, a coordinate axis figure 58, and a mark 60.

The guide 56 is an example of the first guide and includes a frame 56a and a character string 56b. The frame 56a is a figure imitating the outer shape of the object 54. In an example described herein, the outer shape of the object 54 is rectangular, and the frame 56a has a rectangular shape. In the frame 56a, the character string 56b that is the same as the character string "ABCDE" that is drawn on the object 54 is displayed. A position at which the coordinate axis figure 58 is displayed on the display 26 corresponds to the ideal capturing position in the three-dimensional space and is determined based on the position (x, y, z) of the registration image capturing device 10 when the registration image capturing device 10 captures the image of the object 54 at the ideal capturing position. The direction (that is, the rotation angle about the Z-axis) of the character string 56b on the XY plane is determined based on the rotation angle of the registration image capturing device 10 about the Z-axis when the registration image capturing device 10 captures the image of the object 54 at the ideal capturing position. The size of the guide 56 (that is, the size of the frame 56a and the size of the character string 56b) is determined based on the distance WD when the registration image capturing device 10 captures the image of the object 54. Data that represents the guide 56 is generated by the registration image capturing device 10, the collation image capturing device 12, the collation device 14 or another device.

The guide 56 is displayed with the result that the first function described above is performed. In an example described herein, the specific positional relationship is a combination of the first relationship and the second relationship. The frame 56a functions as a guide for causing the position of the camera 24 to match the position of the object 54 in the three-dimensional space. The frame 56a is a guide for statically inducing the positions to be matched. The character string 56b functions as a guide for causing the rotation angle of the collation image capturing device 12 about the Z-axis to match the rotation angle of the object 54 about the Z-axis. The character string 56b may function as a guide for causing the position of the camera 24 to match the position of the object 54 in the three-dimensional space. The character string 56b is a guide for statically inducing the rotation and the positions to be matched.

The coordinate axis figure 58 contains a guide 58X that represents the X-axis and a guide 58Y that represents the Y-axis. An intersection point 58C between the guide 58X and the guide 58Y corresponds to the origin of the three-dimensional rectangular coordinate system. A position at which the intersection point 58C is displayed on the display 26 corresponds to a position that is determined based on the ideal angles in the three-dimensional space and is specifically determined based on the angle φ when the registration image is acquired.

The mark 60 is a figure that represents the rotation angles (specifically, the rotation angle about the X-axis and the rotation angle about the Y-axis) of the collation image capturing device 12 that are acquired by the gyro-sensor that is included in the sensor 28. In an example illustrated in Fig. 9, the mark 60 has a cross shape. The shape, however, is just an example. The shape of the mark 60 may be circular, rectangular, or another shape. The processor 36 causes the display 26 to display the mark 60 at a position associated with the rotation angles that are acquired by the gyro-sensor. When the direction of the collation image capturing device 12 changes, the gyro-sensor detects the change, and the processor 36 changes a position at which the mark 60 is displayed in response to the change.

The coordinate axis figure 58 and the mark 60 are examples of the second guide and are displayed with the result that the second function is performed. The position at which the mark 60 is displayed changes depending on the direction of the collation image capturing device 12, and accordingly, the mark 60 is a guide for dynamically inducing the rotation angles about the X-axis and the Y-axis to be matched. The coordinate axis figure 58 is a static guide that represents the coordinate axes for the mark 60 that functions as a dynamic guide. Data that represents the coordinate axis figure 58 and the mark 60 is generated by the registration image capturing device 10, the collation image capturing device 12, the collation device 14, or another device and is stored in the memory 34 of the collation image capturing device 12.

The processor 36 simultaneously performs the first function and the second function and causes the display 26 to simultaneously display the guide 56, the coordinate axis figure 58, and the mark 60.

In the example illustrated in Fig. 9, the processor 36 causes the mark 60 that functions as the second guide to be displayed in the frame 56a of the guide 56 that functions as the first guide. Consequently, the second guide is displayed in the first guide. A change in the line of sight of the user when the first guide and the second guide are viewed may be decreased in a manner in which the second guide is thus displayed in the first guide, unlike the case where the second guide is displayed outside the first guide.

The user changes the position (that is, coordinates (x, y, z) in the three-dimensional space) of the collation image capturing device 12 such that the position at which the object 54 is displayed on the display 26 substantially matches the position at which the frame 56a is displayed. The user changes the rotation angle of the collation image capturing device 12 about the Z-axis such that the direction of the character string 56b substantially matches the direction of the character string that is drawn on the object 54. The user changes the rotation angles of the collation image capturing device 12 about the X-axis and the Y-axis such that the position at which the mark 60 is displayed substantially matches the position at which the intersection point 58C is displayed. The technical significance of substantial matching of the positions of display is the same as that described above with reference to Fig. 8.

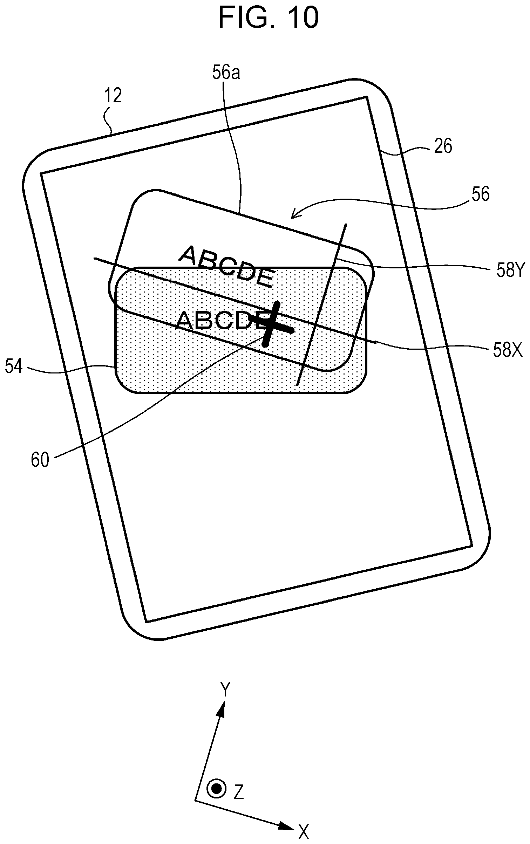

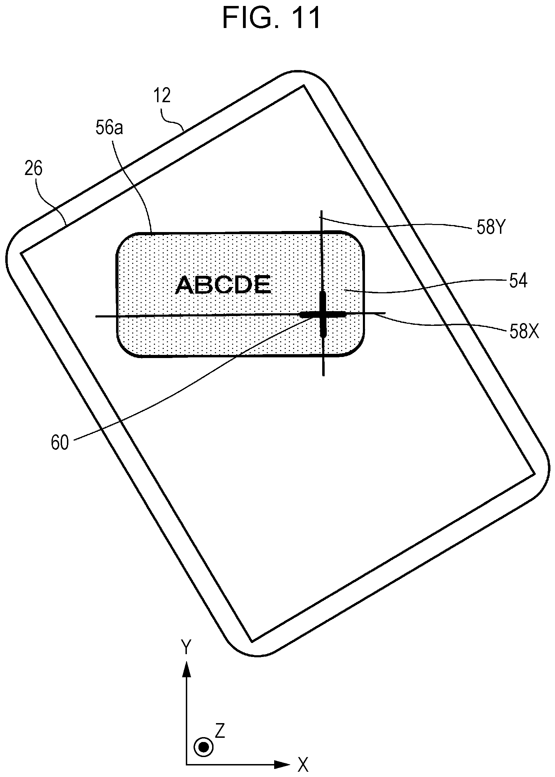

Fig. 10 and Fig. 11 illustrate examples of these operations. In an example illustrated in Fig. 10, the user moves the collation image capturing device 12 on the XY plane and rotates the collation image capturing device 12 about the Z-axis. In a state illustrated in Fig. 10, the position at which the object 54 is displayed does not substantially match the position at which the frame 56a is displayed, and the position at which the mark 60 is displayed does not substantially match the position at which the intersection point 58C is displayed. In a state illustrated in Fig. 11, the position at which the object 54 is displayed substantially matches the position at which the frame 56a is displayed, the direction of the character string 56b substantially matches the direction of the character string that is drawn on the object 54, and the position at which the mark 60 is displayed substantially matches the position at which the intersection point 58C is displayed. In this state, it may be said that a positional relationship between the object 54 and the collation image capturing device 12 is a specific positional relationship, and angles between the object 54 and the collation image capturing device 12 are specific angles. That is, it may be said that the collation image capturing device 12 is installed at the ideal capturing position, and that the angles of the collation image capturing device 12 with respect to the object 54 are set to the ideal angles.

The simultaneous performance of the first function and the second function enables the user to cause the posture of the collation image capturing device 12 with respect to the object to match the ideal posture by simultaneously performing the first operation and the second operation. Consequently, the posture of the collation image capturing device 12 with respect to the object can match the ideal posture unlike the case where the second function is performed after the first operation ends, and the second operation is performed, or the case where the first function is performed after the second operation ends, and the first operation is performed.

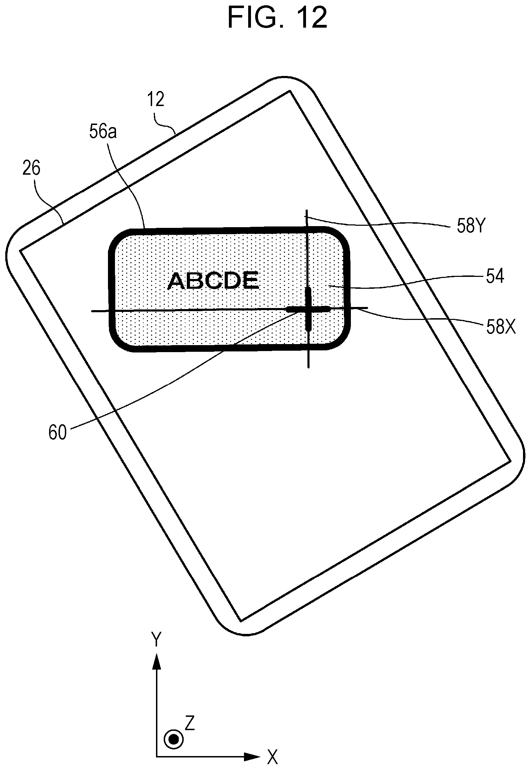

In the case where the positional relationship between the object 54 and the collation image capturing device 12 becomes the specific positional relationship, the processor 36 may perform the first emphasis process to represent the case. Similarly, in the case where the angles between the object 54 and the collation image capturing device 12 become the specific angles, the processor 36 may perform the second emphasis process to represent the case. Fig. 12 illustrates an emphasized guide. For example, in the case where the position at which the object 54 is displayed substantially matches the position at which the frame 56a is displayed, the processor 36 changes the color of the frame 56a or the character string 56b in the first emphasis process. In the case where the direction of the character string that is drawn on the object 54 substantially matches the direction of the character string 56b, the processor 36 changes the color of the frame 56a or the character string 56b in the first emphasis process. In the case where the position at which the mark 60 is displayed substantially matches the position at which the intersection point 58C is displayed, the processor 36 changes the color of the frame 56a or the character string 56b in the second emphasis process. In an example illustrated in Fig. 12, the emphasis process is to change the color of the frame 56a. However, a sound or a character string that represents that the positions of display substantially match each other may be outputted, or a vibration may be produced as described above.

For example, in the case where the position at which the object 54 is displayed substantially matches the position at which the frame 56a is displayed, and the direction of the character string that is drawn on the object 54 substantially matches the direction of the character string 56b, the processor 36 changes the color of the frame 56a that is displayed. In the case where the position at which the mark 60 is displayed substantially matches the position at which the intersection point 58C is displayed, the processor 36 vibrates the collation image capturing device 12. The processor 36 may thus change the first emphasis process and the second emphasis process from each other.

### Second Example

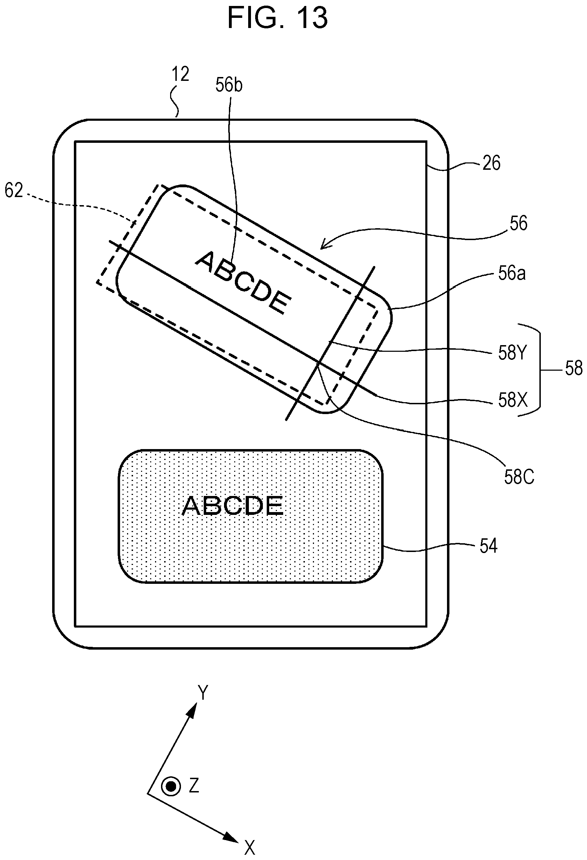

A second example will now be described with reference to Fig. 13. Fig. 13 illustrates a guide in the second example.

In the second example, a frame 62 is displayed on the display 26 as the second guide instead of the mark 60 in the first example. The first guide in the second example is the same as the first guide in the first example.

The frame 62 is a figure imitating the outer shape of the object 54. The processor 36 causes the frame 62 to be displayed in a predetermined range, based on the position at which the frame 56a that is included in the first guide is displayed. For example, the processor 36 displays the frame 62 near the frame 56a. The change in the line of sight of the user when the first guide and the second guide are viewed may be decreased in a manner in which the second guide is thus displayed near the first guide as in the first example.

The processor 36 changes the shape of the frame 62 depending on the rotation angles about the X-axis and about the Y-axis that are acquired by the gyro-sensor. A state in which the shape of the frame 62 is substantially the same as the shape of the frame 56a corresponds to a state in which the angles between the object 54 and the collation image capturing device 12 are the specific angles.

The processor 36 may cause the display 26 to display the frame 62 and may express the second guide by using a character string or a voice. The processor 36 may perform the first emphasis process and the second emphasis process as in the first example.

### Third Example

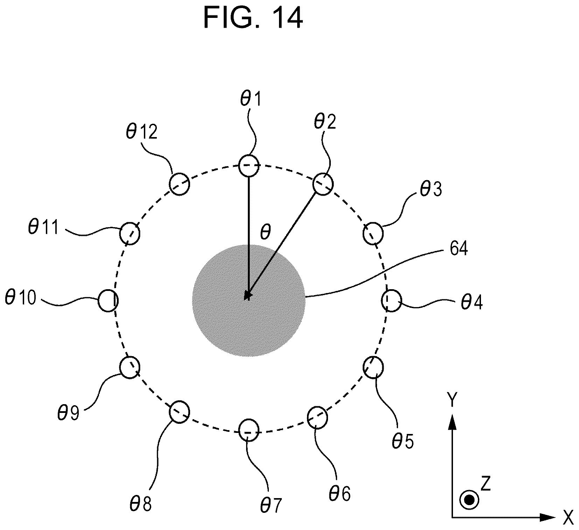

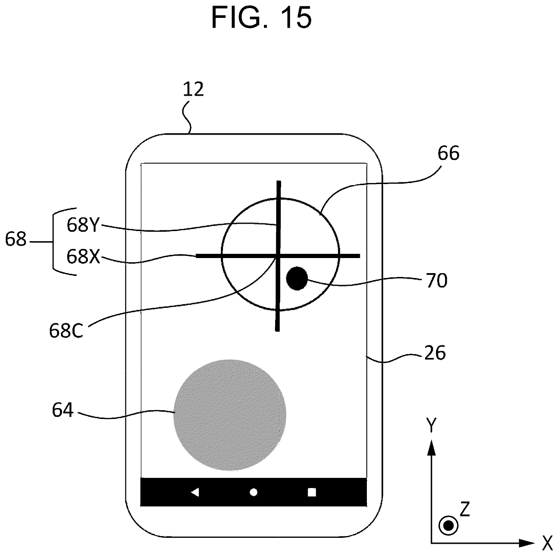

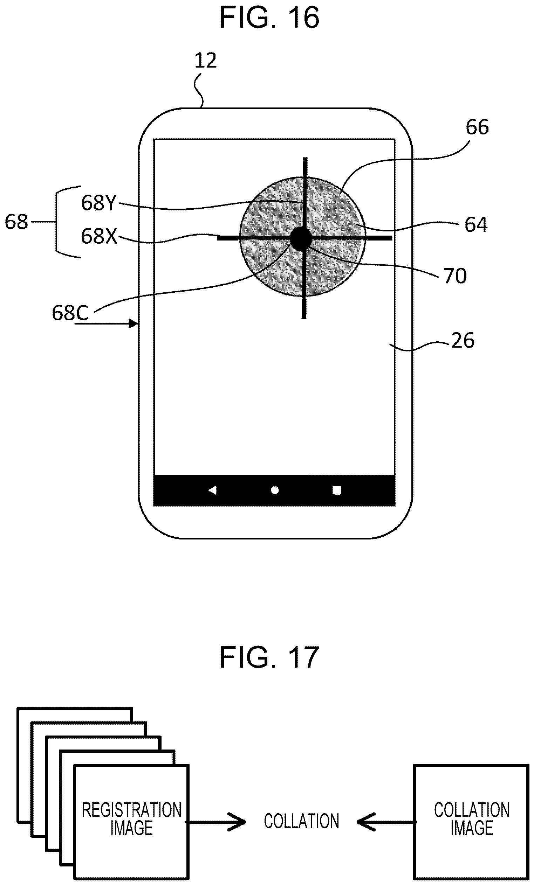

A third example will now be described with reference to Fig. 14 to Fig. 17. Fig. 14 illustrates an object 64 viewed in the Z-direction. Fig. 15 and Fig. 16 illustrate a guide in a third example. Fig. 17 illustrates registration images and a collation image.

A specific positional relationship in the third example includes only the first relationship described above. The specific positional relationship does not include a relationship about the rotation angle about the Z-axis.

A character string such as a logo is not displayed on the object 64 in the third example. In an example described herein, the object 64 has a circular shape.

In the case where the registration images of the object 64 are acquired, light is radiated to the object 64 in multiple different radiation directions, the image of the object 64 is captured, and consequently, the multiple registration images are acquired in different light radiation directions.

For example, an axis perpendicular to the surface of the object 64 is defined as the Z-axis, and the rotation angle about the Z-axis is defined as an angle θ. θ1 to θ12 illustrated in Fig. 14 represent the angle of the light source 16 about the Z-axis when the registration images are acquired. In an example illustrated in Fig. 14, the image of the object 64 is captured 12 times when the registration images of the object 64 are acquired, and 12 registration images are acquired in the different light radiation directions. Specifically, the angle θ1 is an angle at which the light source 16 is disposed when the image is captured for the first time, and the angle θ2 is an angle at which the light source 16 is disposed when the image is captured for the second time. The same is true for the angles θ3 to θ12. The 12 registration images are outputted to the collation device 14 and are stored in the memory 42 of the collation device 14. Consequently, the 12 registration images are registered in the registration image DB. The angles θ1 to θ12 are just examples. The number of times the image is captured when the registration images are acquired is not limited to 12 times. The number of times the image is captured may be determined depending on, for example, the shape, size, or the kind of the random pattern of the object 64.

Fig. 15 illustrates the first guide and the second guide in the third example. A frame 66 is an example of the first guide and has a shape imitating the outer shape of the object 64. The size of the frame 66 is determined based on the distance WD when the registration images of the object 64 are acquired. A character string such as a logo is not drawn on the object 64, and accordingly, a character string is not displayed in the frame 66. The frame 66 functions as a guide for causing the position of the camera 24 to match the position of the object 64 in the three-dimensional space.

A coordinate axis figure 68 and a mark 70 are examples of the second guide. The coordinate axis figure 68 contains a guide 68X that represents the X-axis and a guide 68Y that represents the Y-axis. An intersection point 68C between the guide 68X and the guide 68Y corresponds to the origin of the three-dimensional rectangular coordinate system. The mark 70 is a figure that represents the rotation angles (specifically, the rotation angle about the X-axis and the rotation angle about the Y-axis) of the collation image capturing device 12 that are acquired by the gyro-sensor that is included in the sensor 28. The mark 70 is a guide for dynamically inducing the rotation angles to be matched. The coordinate axis figure 68 is a static guide that represents the coordinate axes for the mark 70 that functions as a dynamic guide.

The user changes the position (that is, coordinates (x, y, z) in the three-dimensional space) of the collation image capturing device 12 such that the position at which the object 64 is displayed on the display 26 substantially matches the position at which the frame 66 is displayed. The user changes the rotation angles of the collation image capturing device 12 about the X-axis and about the Y-axis such that the position at which the mark 70 is displayed substantially matches the position at which the intersection point 68C is displayed.

In Fig. 16, the position at which the object 64 is displayed substantially matches the position at which the frame 66 is displayed, and the position at which the mark 70 is displayed substantially matches the position at which the intersection point 68C is displayed. For example, in this state, the camera 24 acquires the collation image of the object 64.

The collation image is outputted from the collation image capturing device 12 to the collation device 14. The processor 44 of the collation device 14 collates the multiple registration images that are captured at various angles θ and the collation image.

Fig. 17 illustrates an example of the collation. In the example described above, the 12 registration images are acquired when the object 64 is registered, and accordingly, the processor 44 collates the 12 registration images and the collation image.

The processor 44 may identify the light radiation directions from the luminance distribution of the collation image or the spot of light detected in the collation image, may identify the registration image that is captured in the same radiation direction as the identified radiation direction among the multiple registration images, and may collate the identified registration image and the collation image.

### Collation Method

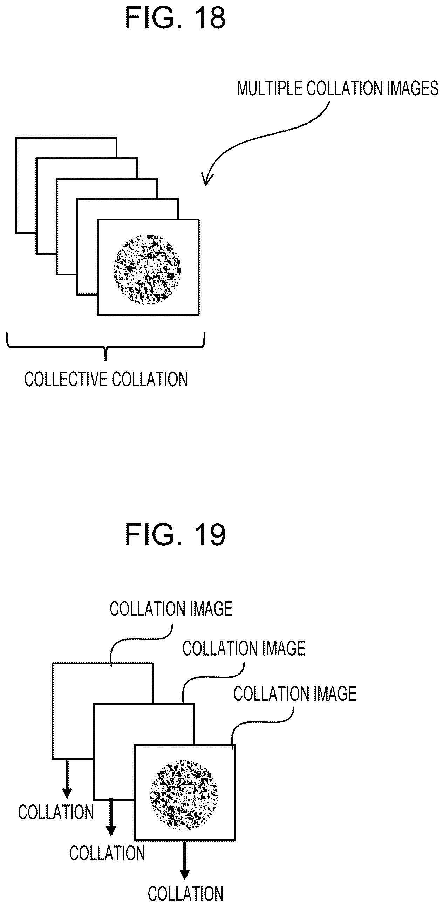

A specific example of a method of collating the registration images and collation images will now be described with reference to Fig. 18 and Fig. 19. Fig. 18 and Fig. 19 illustrate the collation images. Fig. 18 is a diagram for describing a first collation method. Fig. 19 is a diagram for describing a second collation method.

In the first collation method, the collation image capturing device 12 acquires the multiple collation images, and the multiple collation images and the registration images are subsequently collated. For example, when the first operation and the second operation are performed, the camera 24 of the collation image capturing device 12 acquires the multiple collation images by capturing the image of the object at any time or at a regular interval. The acquired multiple collation images are stored in the memory 34 of the collation image capturing device 12. Capturing the image may be suspended in response to a user instruction. The acquired multiple collation images are transmitted from the collation image capturing device 12 to the collation device 14. For example, in the case where the first function and the second function that are performed end, in the case where the user requests the transmission of the collation images, or in the case where the positional relationship between the object and the collation image capturing device 12 becomes the specific positional relationship, and the angles of the collation image capturing device 12 with respect to the object become the specific angles, the processor 36 transmits the multiple collation images that are stored in the memory 34 to the collation device 14. The collation image capturing device 12 thus captures and stores the collation images and transmits the multiple collation images that are captured and stored to the collation device 14. The processor 44 of the collation device 14 collates the multiple collation images and the registration images and transmits the result of collation to the collation image capturing device 12. Consequently, the result of collation by using the multiple collation images that are captured and stored is outputted to the collation image capturing device 12. In this way, the collation by using the multiple collation images that are captured and stored may reduce the probability of erroneous determination. In this case, the processor 44 may transmit information that represents the collation images that match the registration images to the collation image capturing device 12 as the result of collation.

In the second collation method, the acquired collation image and the registration images are collated whenever the collation image capturing device 12 acquires the collation image. For example, when the user performs the first operation and the second operation, the camera 24 of the collation image capturing device 12 acquires the collation image by capturing the image of the object at any time or at a regular interval, and the processor 36 transmits the collation image to the collation device 14 whenever the collation image is acquired. Capturing the image may be suspended in response to a user instruction. Whenever the processor 44 of the collation device 14 receives the collation image that is transmitted from the collation image capturing device 12, the processor 44 collates the received collation image and the registration images, and the result of collation is transmitted to the collation image capturing device 12. Consequently, while the first operation and the second operation are performed, the result of collation is provided to the user, and a time required for the collation decreases.

In another collation method, in the case where the user requests the collation by using the collation image capturing device 12 when the first operation and the second operation are performed, the processor 36 may transmit one or multiple collation images that are acquired until the request is received to the collation device 14. At this time, the user may select the collation image to be collated. The processor 44 of the collation device 14 collates the one or multiple collation images that are transmitted from the collation image capturing device 12 and the registration images and transmits the result of collation to the collation image capturing device 12.

In another collation method, in the case where the positional relationship between the object and the collation image capturing device 12 becomes the specific positional relationship, and the angles of the collation image capturing device 12 with respect to the object become the specific angles, the processor 36 may control the camera 24 and may cause the camera 24 to capture the image of the object. The processor 36 transmits the captured collation image to the collation device 14. The collation device 14 collates the collation image that is transmitted from the collation image capturing device 12 and the registration images and transmits the result of collation to the collation image capturing device 12. The collation image that is acquired by capturing the image of the object at the ideal capturing position and the ideal angles is collated. In this way, the precision of the collation may be improved unlike the case where a collation image that is acquired in different conditions is collated. That is, in this way, the collation image that improves the precision of the collation may be acquired.

The processor 36 of the collation image capturing device 12 may collate the registration images and the collation image. For example, when the collation image is acquired, the processor 36 acquires the registration images from the collation device 14 and collates the registration images and the collation image. The registration images may not be stored in the collation device 14 but may be stored in another device (for example, an image server), and the collation image capturing device 12 may acquire the registration images from the other device.

For example, the collation image capturing device 12 and the collation device 14 described above are provided by using hardware and software in corporation with each other. For example, the processor of each device reads and runs a program that is stored in the memory of the device, and consequently, the function of the device is fulfilled. The program is stored in the memory via a recording medium such as a CD or a DVD or via a communication path such as a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing apparatus includes a processor configured to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.
(((2))) As for the information processing apparatus described in (((1))), the first function includes a function of statically or dynamically inducing the first operation to be performed such that the positional relationship between the object and the image capturing device is maintained in the specific positional relationship, and the second function includes a function of statically or dynamically inducing the second operation to be performed such that the angle between the object and the image capturing device is maintained at the specific angle.
(((3))) As for the information processing apparatus described in (((1))) or (((2))), the first function includes a function of outputting a first guide for assisting in performing the first operation by using a figure, a character string, or a sound, and the second function includes a function of outputting a second guide for assisting in performing the second operation by using a figure, a character string, or a sound.
(((4))) As for the information processing apparatus described in (((3))), the first function is a function of displaying the first guide on a display, the second function is a function of displaying the second guide on the display, and the processor is configured to cause the display to simultaneously display the first guide and the second guide.
(((5))) As for the information processing apparatus described in (((3))) or (((4))), the second guide includes a guide for dynamically representing a state of the image capturing device by using information that is acquired by a sensor.
(((6))) As for the information processing apparatus described in any one of (((3))) to (((5))), the processor is configured to cause the second guide to be displayed in a predetermined range, based on a position at which the first guide is displayed.
(((7))) As for the information processing apparatus described in any one of (((3))) to (((5))), the processor is configured to cause the second guide to be displayed in the first guide.
(((8))) As for the information processing apparatus described in any one of (((3))) to (((7))), the first function is a function of displaying the first guide on a display, the second function is a function of outputting the second guide by using a sound, and the processor is configured to cause the display to display the first guide by using the first function and output the second guide by using the second function and by using the sound.
(((9))) As for the information processing apparatus described in any one of (((1))) to (((8))), the processor is configured to perform a first emphasis process in a case where the positional relationship between the object and the image capturing device becomes the specific positional relationship to represent the case.
(((10))) As for the information processing apparatus described in any one of (((1))) to (((9))), the processor is configured to perform a second emphasis process in a case where the angle between the object and the image capturing device becomes the specific angle to represent the case.
(((11))) As for the information processing apparatus described in (((10))), the second emphasis process differs from the first emphasis process.
(((12))) As for the information processing apparatus described in any one of (((1))) to (((11))), the image capturing device captures and acquires a plurality of collation images when the user performs the first operation and the second operation, and the plurality of collation images and a registration image for identifying the object are collated after the image capturing device acquires the plurality of collation images.
(((13))) The information processing apparatus described in any one of (((1))) to (((11))), the image capturing device captures and acquires a collation image when the user performs the first operation and the second operation, and the collation image and a registration image for identifying the object are collated whenever the image capturing device acquires the collation image.
(((14))) A program causing a computer to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

As for (((1))) to (((5))) and (((14))), the user can readily maintain the posture of the image capturing device with respect to the object in the specific posture unlike the case where a function of assisting the user to operate the image capturing device such that the positional relationship between the object and the image capturing device is maintained in the specific positional relationship and a function of assisting the user to operate the image capturing device such that the angle between the object and the image capturing device is maintained at the specific angle are sequentially performed.

As for (((6))), the magnitude of a change in the line of sight of the user when the posture of the image capturing device with respect to the object is maintained in the specific posture decreases, unlike the case where the second guide is displayed outside the predetermined range, based on the position at which the first guide is displayed.

As for (((7))), the magnitude of the change in the line of sight of the user when the posture of the image capturing device with respect to the object is maintained in the specific posture decreases, unlike the case where the second guide is displayed outside the first guide.

As for (((8))), while the first operation is performed in accordance with the first guide that is displayed on the display, the second operation can be performed in accordance with the second guide that is provided by using the sound.

As for (((9))), the user can be notified of the fact that the positional relationship between the object and the image capturing device becomes the specific positional relationship.

As for (((10))), the user can be notified of the fact that the angle between the object and the image capturing device becomes the specific angle.

As for (((11))), the user can be notified of the end of the first operation or the second operation.

As for (((12))), the probability of erroneous determination of the collation is reduced.

As for (((13))), a time required for the collation decreases.

## Claims

1. An information processing apparatus comprising:
a processor configured to:
simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

2. The information processing apparatus according to Claim 1,
wherein the first function includes a function of statically or dynamically inducing the first operation to be performed such that the positional relationship between the object and the image capturing device is maintained in the specific positional relationship, and
wherein the second function includes a function of statically or dynamically inducing the second operation to be performed such that the angle between the object and the image capturing device is maintained at the specific angle.

3. The information processing apparatus according to Claim 1 or 2,
wherein the first function includes a function of outputting a first guide for assisting in performing the first operation by using a figure, a character string, or a sound, and
wherein the second function includes a function of outputting a second guide for assisting in performing the second operation by using a figure, a character string, or a sound.

4. The information processing apparatus according to Claim 3,
wherein the first function is a function of displaying the first guide on a display,
wherein the second function is a function of displaying the second guide on the display, and
wherein the processor is configured to:
cause the display to simultaneously display the first guide and the second guide.

5. The information processing apparatus according to Claim 3 or 4,
wherein the second guide includes a guide for dynamically representing a state of the image capturing device by using information that is acquired by a sensor.

6. The information processing apparatus according to any one of Claims 3 to 5,
wherein the processor is configured to:
cause the second guide to be displayed in a predetermined range, based on a position at which the first guide is displayed.

7. The information processing apparatus according to any one of Claims 3 to Claim 5,
wherein the processor is configured to:
cause the second guide to be displayed in the first guide.

8. The information processing apparatus according to any one of Claims 3 to 7,
wherein the first function is a function of displaying the first guide on a display,
wherein the second function is a function of outputting the second guide by using a sound, and
wherein the processor is configured to:
cause the display to display the first guide by using the first function; and
output the second guide by using the second function and by using the sound.

9. The information processing apparatus according to any one of Claims 1 to 8,
wherein the processor is configured to:
perform a first emphasis process in a case where the positional relationship between the object and the image capturing device becomes the specific positional relationship to represent the case.

10. The information processing apparatus according to any one of Claims 1 to 9,
wherein the processor is configured to:
perform a second emphasis process in a case where the angle between the object and the image capturing device becomes the specific angle to represent the case.

11. The information processing apparatus according to Claim 10,
wherein the second emphasis process differs from the first emphasis process.

12. The information processing apparatus according to any one of Claims 1 to 11,
wherein the image capturing device captures and acquires a plurality of collation images when the user performs the first operation and the second operation, and
wherein the plurality of collation images and a registration image for identifying the object are collated after the image capturing device acquires the plurality of collation images.

13. The information processing apparatus according to any one of Claims 1 to 11,
wherein the image capturing device captures and acquires a collation image when the user performs the first operation and the second operation, and
wherein the collation image and a registration image for identifying the object are collated whenever the image capturing device acquires the collation image.

14. A program causing a computer to simultaneously perform a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.

15. A method comprising:
simultaneously performing a first function of assisting a user to perform a first operation on an image capturing device such that a positional relationship between an object and the image capturing device that captures an image of the object is maintained in a specific positional relationship and a second function of assisting the user to perform a second operation on the image capturing device such that an angle between the object and the image capturing device is maintained at a specific angle.
